# EUROPEAN PATENT APPLICATION

(11) **EP 2 149 749 A1**
(43) Date of publication of application: **03.02.2010**
(21) Application number: 08773091.7
(22) Date of filing: 03.07.2008
(51) Int. Cl.: F21V 33/00, F21V 8/00, F21Y 101/02

(54) **AN ELECTRIC APPARATUS**

(30) Priority: 25.07.2007 CN 200720155643 U
(71) Applicant: Shenzhen Huawei Communication Technologies Co., Ltd, Shenzhen, Guangdong 518129 (CN)
(72) Inventor: YI, Mingang, Guangdong 518129 (CN); ZHANG, Jian, Guangdong 518129 (CN); HUANG, Yanzhu, Guangdong 518129 (CN); ZHONG, Chao, Guangdong 518129 (CN); LIN, You, Guangdong 518129 (CN); WU, Guzheng, Guangdong 518129 (CN); WEI, Dong, Guangdong 518129 (CN)
(74) Representative: Körber, Martin Hans
(86) International application number: PCT/CN2008/071530
(87) International publication number: WO 2009/012682

(57) **Abstract**

An electric apparatus, comprising a housing (30) having a parting line (31), a light guiding pole (32) provided at the parting line (31) of the housing (30), and a light emitter provided in the inner side of the housing (30). The light emitting from the light emitter is send to the outside of the housing (30) via the light guiding pole (32), and the light is used to indicate the working state of the electric apparatus.

## Description

This application claims priority to Chinese Patent Application No. 200720155643.9 filed on July 25, 2007, entitled "ELECTRONIC DEVICE", which is incorporated herein by reference as if reproduced in its entirety.

### Field of the Disclosure

The present disclosure relates to the field of electronic technologies, and in particular to an electronic device having a light indication.

### Background of the Disclosure

With the gradually matured electronic technologies and the intensive competition in the electronic device market, common users' requirements on the electronic device are also changed. The electronic device is required to have a distinct extrinsic appearance i.e. a unique and exquisite appearance, as well as an excellent intrinsic quality i.e. a complete functional performance. The light indication method of the electronic device should take the state indication of the electronic device into account, and should also consider to well combine the light indication of the electronic device with the extrinsic appearance of the electronic device, i.e. to incorporate the light indication into the appearance of the electronic device to make them to be complementary to each other, so that the light indication of the electronic device can be a characteristic of the electronic device, which can thus attract numerous users and improve user experience.

When implementing the present disclosure, the inventors have found after investigation that at present, one or more Light Emitting Diodes (LED) are often arranged on the panel of the electronic device, and the current operation state of the electronic device is indicated through the screen of the electronic device. This has not taken the incorporation of the light indication and the appearance of the electronic device, which may improve the extrinsic appearance of the electronic device and increase the attractiveness of the electronic device, into fully account.

### Summary of the Disclosure

The embodiments of the present disclosure provide an electronic device, which in combination with the appearance of the electronic device can indicate the operation state of the electronic device.

The embodiments of the present disclosure solve the above problems based on the technical solutions as follows.

The embodiments of the present disclosure provide an electronic device, which includes:
a housing, which includes a parting line;
a light guide, arranged at a joint of the housing along the parting line; and
an illuminant, arranged at an inner side of the housing, wherein light from the illuminant exits from the housing of the electronic device through the light guide to implement a light indication along the joint of the housing of the electronic device.

According to the electronic device provided by the embodiments of the present disclosure, the illuminant can be controlled according to the operation state of the electronic device to provide a light indication along the joint of the housing of the electronic device, thus the current operation state of the electronic device can be indicated by different light emitting modes, and the appearance of the electronic device and the user experience can be improved.

### Brief Description of the Drawings

Figure 1 is a flow chart illustrating a light indication process of an electronic device according to an embodiment of the present disclosure;

Figure 2 is a diagram illustrating a circuit for controlling an LED indicator lamp in the electronic device according to an embodiment of the present disclosure;

Figure 3 is a structural schematic diagram illustrating a housing of the electronic device according to an embodiment of the present disclosure;

Figure 4 is a flow chart illustrating the light indication process of the electronic device according to another embodiment of the present disclosure;

Figure 5 is a diagram illustrating a circuit for controlling an EL cold light film in the electronic device according to an embodiment of the present disclosure; and

Figure 6 is a schematic diagram illustrating positions of a light guide and the EL cold light film in the electronic device according to an embodiment of the present disclosure.

### Detailed Description of the Embodiments

The embodiments of the present disclosure provide an electronic device. In order to further clarify the technical solutions of the present disclosure, the present disclosure is described in more detail hereinbelow with reference to the appended drawings and the embodiments.

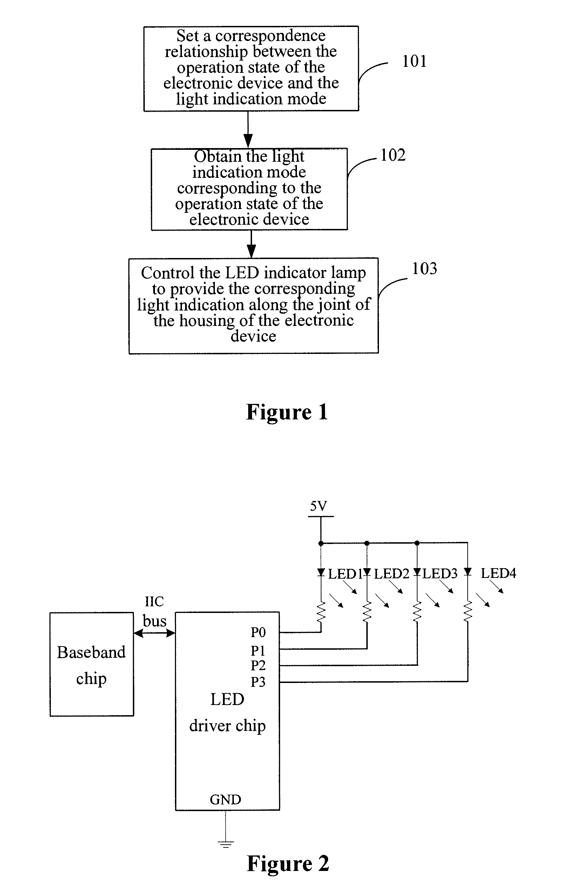

Figure 1 is a flow chart illustrating a light indication process of an electronic device according to an embodiment of the present disclosure. In the embodiment of the present disclosure, an LED indicator lamp is used as the light emitting device. The specific light indication process of the electronic device includes the following.

Step 101: A correspondence relationship between each operation state of the electronic device and the light indication mode is set.

The correspondence relationship between the operation state of the electronic device and the light indication mode can be set by setting a correspondence table between the operation state of the electronic device and the light indication mode, as illustrated in Table 1 below.

**Table 1 Correspondence Table between Operation State of Electronic Device and Light Indication Mode**

| Operation State of Electronic Device | Light Indication Mode of LED |
|---|---|
| Power up | Always On: Indicator lamp being always on |
| Standby | Strobe-flash: Indicator lamp being turned on and off periodically |
| In operation | Fade: Indicator lamp fading in and out periodically |

For example, if the electronic device is a mobile phone, when the mobile phone is being powered up, the LED indicator lamp is always on; when the mobile phone is standby or idle, the LED indicator lamp is turned on and off periodically; and when the mobile phone is in operation, e.g. in communication, the LED indicator lamp fades in and out periodically.

Step 102: The light indication mode corresponding to the operation state of the electronic device is obtained according to the operation state of the electronic device.

Specifically, obtaining of the light indication mode corresponding to the operation state of the electronic device may be implemented by searching the correspondence table between the operation state of the electronic device and the light indication mode set in step 101, so as to obtain the light indication mode corresponding to the current operation state of the electronic device.

Step 103: The light emitting device is controlled to provide the corresponding light indication along the joint of the housing of the electronic device according to the obtained light indication mode.

Specifically, controlling of the illuminant to provide the corresponding light indication along the joint of the housing of the electronic device according to the obtained light indication mode includes steps as follows.

Step A: The illuminant (here the LED indicator lamp) is controlled according to the obtained light indication mode.

Figure 2 is a diagram illustrating a circuit for controlling an LED indicator lamp in the electronic device according to an embodiment of the present disclosure. The process of controlling the illuminant (here the LED indicator lamp) to provide the corresponding light indication according to the obtained light indication mode is as follows.

A baseband chip controls an LED indicator lamp driver chip (e.g. MAX7315) through the standard Inter-Integrated Circuit (IIC) bus. For example, by performing a writing operation for the internal register of the LED indicator lamp driver chip, the eight ports P0 to P7 of the LED indicator lamp driver chip may be controlled. By controlling those ports P0, P1, P2 and P3, the control (e.g. operations of controlling to turn on the corresponding LED indicator lamp, to turn off the LED indicator lamp, to adjust the intensity of the LED indicator lamp, etc.) over the LED indicator lamps LED 1, LED2, LED3 and LED4 can be implemented respectively.

The specific control process is as follows. The ports P0 to P3 each correspond to an integrated MOS switch inside the chip. When the MOS switch is closed, the corresponding LED indicator lamp gets into a high-intensity mode. When the MOS switch is opened, the corresponding LED indicator lamp gets into an off mode. When a Pulse Width Modulation (PWM) signal at a specific frequency controls the MOS switch to be closed and opened continuously, the corresponding LED indicator lamp emits light at specific intensities, thus achieving fading in and out effects.

Step B: The illuminant (here the LED indicator lamp) provides the light indication along the joint of the housing of the electronic device.

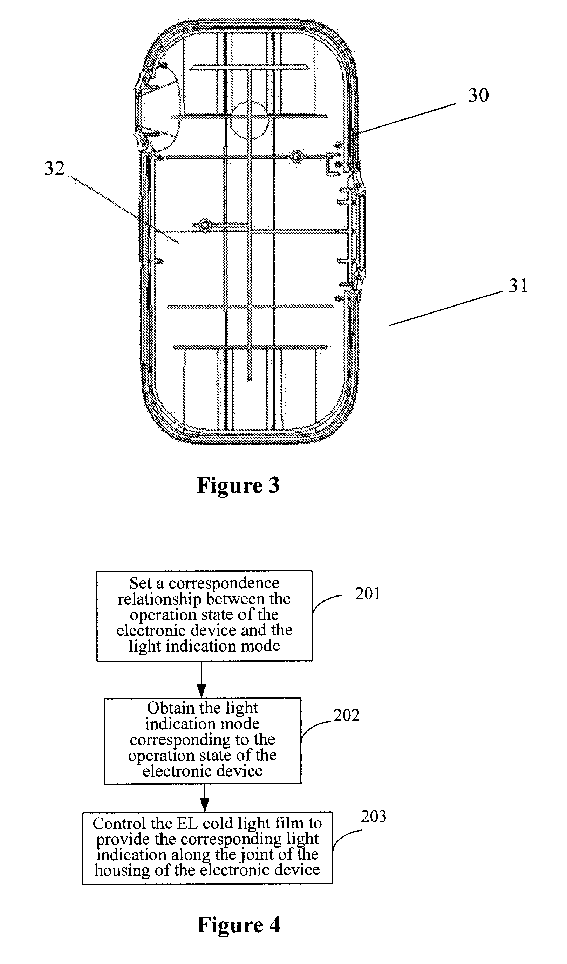

Figure 3 is a structural schematic diagram illustrating a housing of the electronic device according to an embodiment of the present disclosure. The housing 30 of the electronic device includes a parting line 31. A light guide 32 is a colored light-permeable body and is arranged at the joint of the housing 30 of the electronic device along the parting line 31. The LED indicator lamp is distributed inside the housing 30 of the electronic device, and is controlled by the chip inside the electronic device according to the operation state of the electronic device, so as to emit light and to provide a light indication along the joint of the housing 30 of the electronic device through the light guide 32.

For example, when the LED indicator lamp emits light, due to the light-permeable nature of the light guide, a light transmission gap is formed along the joint of the housing of the electronic device.

In order to enhance the light indication effect of the LED indicator lamp along the joint of the housing of the electronic device, a light-proof processing may be performed for the inner side of the housing of the electronic device. For example, a light-proof coat may be added at the inner side of the housing of the electronic device, so that the light can exit only along the joint of the housing of the electronic device through the light guide.

Therefore, the LED indicator lamp is controlled according to the obtained light indication mode to provide the corresponding light indication along the joint of the housing of the electronic device through the light guide.

Figure 4 is a flow chart illustrating the light indication process of the electronic device according to another embodiment of the present disclosure. In this embodiment, an Electro Luminescent (EL) cold light film is used as the light emitting device. The specific light indication process of the electronic device includes the following.

Step 201: A correspondence relationship between each operation state of the electronic device and the light indication mode is set.

The correspondence relationship between the operation state of the electronic device and the light indication mode can be set by setting a correspondence table between the operation state of the electronic device and the light indication mode, as illustrated in Table 2 below.

**Table 2 Correspondence Table between Operation State of Electronic Device and Light Indication Mode**

| Operation State of Electronic Device | Light Indication Mode of EL cold light film |
|---|---|
| Power up | Always On: Indicator lamp being always on |
| Standby | Strobe-flash: Indicator lamp being turned on and off periodically |
| In operation | Fade: Indicator lamp fading in and out periodically |

For example, if the electronic device is a mobile phone, when the mobile phone is being powered up, the EL cold light film is always on; when the mobile phone is standby or idle, the EL cold light film is turned on and off periodically; and when the mobile phone is in operation, e.g. in communication, the EL cold light film fades in and out periodically.

Step 202: The light indication mode corresponding to the operation state of the electronic device is obtained according to the operation state of the electronic device.

Specifically, obtaining of the light indication mode corresponding to the operation state of the electronic device can be implemented by searching the correspondence table between the operation state of the electronic device and the light indication mode set in the Step 201, so as to obtain the light indication mode corresponding to the current operation state of the electronic device.

Step 203: The light emitting device is controlled to provide the corresponding light indication along the joint of the housing of the electronic device according to the obtained light indication mode.

Specifically, controlling of the illuminant to provide the corresponding light indication along the joint of the housing of the electronic device according to the obtained light indication mode includes steps as follows.

Step A: The illuminant (here the EL cold light film) is controlled according to the obtained light indication mode.

For the EL cold light film, an alternating voltage is applied to the two electrodes to form an electric field, and the electric field may excite the fluorescent substance to emit light, i.e. the electric field light emitting phenomenon. Therefore, an EL cold light film driver chip can transform a 2V to 5V DC voltage into an AC voltage of about 100V to control the EL cold light film to emit light. A control chip controls the EL cold light film driver chip through a common interface to control the light emission of the EL cold light film.

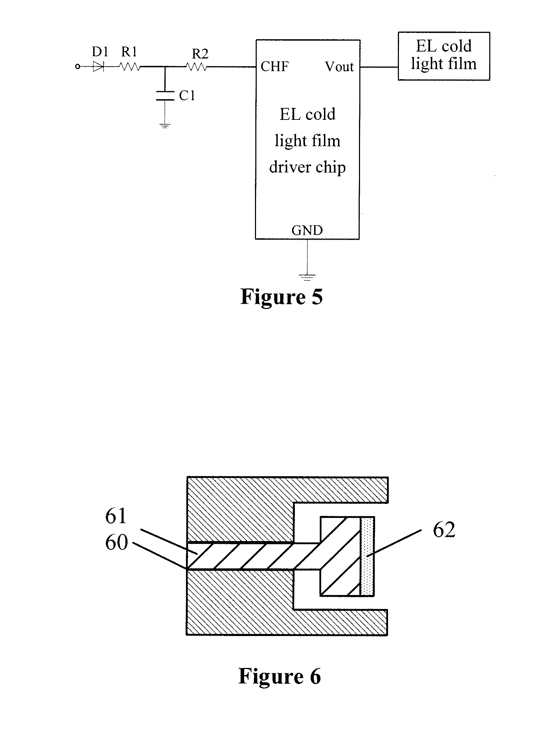

Figure 5 is a diagram illustrating a circuit for controlling an EL cold light film in the electronic device according to an embodiment of the present disclosure. A square-wave signal at a specific frequency is inputted at the left side of a diode D1. When the square-wave signal is at a low level, a capacitor C1 carries out a discharging process through a resistor R2, and the level of a pin 1 of an EL cold light film driver chip D318B is changed slowly from a high level to a low level, so that the EL cold light film moves from a no-light-emitting state to a high-intensity light emitting state. When the square-wave signal is at a high level, C1 carries out a charging process through R1, and the level of the pin 1 of the driver chip D318B is changed slowly from the low level to the high level, so that the EL cold light film moves from the high-intensity light emitting state to the no-light-emitting state. By adjusting the parameters of the three elements, i.e. the resistors R1 and R2 and the capacitor C1, the speed at which the EL cold light film fades in and out can be adjusted.

Step B: The illuminant (here the EL cold light film) provides the light indication along the joint of the housing of the electronic device.

Similar to the previous embodiment, this embodiment sets a light guide, which is a colored light-permeable body, along the joint of the housing of the electronic device.

Figure 6 is a schematic diagram illustrating positions of the EL cold light film and a light guide in the electronic device according to an embodiment of the present disclosure. A light guide 61 is arranged along the joint of a parting line 60 of the housing of the electronic device. An EL cold light film 62 is attached to the inner side of the light guide 61. When the EL cold light film 62 is powered to emit light, the light may pass through the light guide 61 to form a light transmission gap at the joint of the housing of the electronic device. The EL cold light film is controlled by the chip inside the electronic device according to the operation state of the electronic device to emit light and to provide a light indication along the joint of the housing of the electronic device through the light guide 61.

In order to enhance the light indication effect of the EL cold light film along the joint of the housing of the electronic device, a light-proof processing may be performed for the inner side of the housing of the electronic device. For example, a light-proof coat may be added at the inner side of the housing of the electronic device, so that the light can exit only along the joint of the housing of the electronic device through the light guide.

According to the electronic device provided by the embodiments of the present disclosure, the light emitting device can be controlled according to the operation state of the electronic device to provide the light indication along the joint of the housing of the electronic device, thus the current operation state of the electronic device can be indicated by different light emitting modes, and the appearance of the electronic device and the user experience can be improved.

The electronic device provided by the embodiments of the present disclosure has been described in detail in the above. The principle and the embodiments of the present disclosure have been depicted by way of specific examples herein. The described embodiments are merely intended to facilitate understanding the technical solutions of the present disclosure. Those ordinarily skilled in the art can modify the embodiments and the implementation scope thereof without departing from the idea of the present disclosure. Consequently, the disclosure contained herein is not intended to limit the scope of the present disclosure.

## Claims

1. An electronic device, comprising:
a housing, which includes a parting line;
a light guide, arranged at a joint of the housing along the parting line; and an illuminant, arranged at an inner side of the housing, wherein light from the illuminant exits the housing of the electronic device through the light guide to implement a light indication along the joint of the housing of the electronic device.

2. The electronic device according to claim 1, wherein a light-proof processing is performed for the inner side of the housing, so that the light from the illuminant exits the housing of the electronic device only through the light guide.

3. The electronic device according to claim 1, further comprising a controlling unit, arranged at the inner side of the housing, connected with the illuminant, and adapted to control the illuminant to provide the corresponding light indication according to an operation state of the electronic device.

4. The electronic device according to claim 3, wherein the illuminant is a Light Emitting Diode, LED, indicator lamp.

5. The electronic device according to claim 4, wherein the LED indicator lamp is arranged at an inner side of the light guide.

6. The electronic device according to claim 4, wherein the controlling unit is an LED driver chip.

7. The electronic device according to claim 3, wherein the illuminant is an Electro Luminescence cold light film.

8. The electronic device according to claim 7, wherein the Electro Luminescence cold light film is attached to an inner side of the light guide.

9. The electronic device according to claim 7, wherein the controlling unit is an Electro Luminescence cold light film driver chip.
